(19) Europäisches Patentamt
European Patent Office
Office européen des brevets

(11) EP 1 038 392 B1

(12) **EUROPEAN PATENT SPECIFICATION**

(45) Date of publication and mention
of the grant of the patent:
**23.04.2003 Bulletin 2003/17**

(21) Application number: **98959030.2**

(22) Date of filing: **10.12.1998**

(51) Int Cl.⁷: **H04N 5/44**

(86) International application number:
**PCT/GB98/03691**

(87) International publication number:
**WO 99/030490 (17.06.1999 Gazette 1999/24)**

(54) **VIDEO SIGNAL PROCESSING**

VIDEOSIGNALVERARBEITUNG

TRAITEMENT DE SIGNAL VIDEO

(84) Designated Contracting States:
**AT BE CH DE DK ES FR GB IE IT LI NL SE**

(30) Priority: **10.12.1997 GB 9726158**

(43) Date of publication of application:
**27.09.2000 Bulletin 2000/39**

(73) Proprietor: **SNELL & WILCOX LIMITED**
**Twickenham, Middlesex TW1 1RQ (GB)**

(72) Inventors:
• **WESTON, Martin**
**Hampshire GU31 4JF (GB)**

• **COLLIS, William Beningfield**
**South Hampton, Hampshire SO45 6AW (GB)**

(74) Representative: **Garratt, Peter Douglas et al**
**Mathys & Squire**
**100 Grays Inn Road**
**London WC1X 8AL (GB)**

(56) References cited:
**EP-A- 0 651 577        WO-A-97/01929**
**WO-A-97/16923        US-A- 5 226 114**
**US-A- 5 519 647        US-A- 5 621 470**

EP 1 038 392 B1

**Description**

This invention relates to video signal processing and especially to processes of interpolation, particularly spatial interpolation, whether horizontal, vertical or two dimensional. The invention applies in an important example to the process of de-interlacing by which a video frame is derived for each field of an interlaced video signal.

A number of known video signal processing techniques employ weighted sums of pixels. For example, JP-A-0 298 613 discloses an NTSC colour decoding method in which pixels are multiplied by coefficients, and then summed.

Known de-interlacing techniques derive the "missing" lines through a weighted sum of neighbouring sample points, for example, as in WO-A-97 01929. The location of the sample points to be employed and the values of the weighting coefficients are typically chosen to minimise visual artefacts and certain design principles have been established. Adaptive techniques have emerged by which the characteristics of the de-interlacing filter are changed in the face of - for example - motion.

It is an object of aspects of the present invention to provide improved video signal processing by which the appearance of visual artefacts on spatial interpolation is further minimised.

It is a further object of one aspect of the present invention to provide improved video signal processing by which a video frame is derived for each field of an interlaced video signal.

Accordingly, the present invention consists in one aspect in a video process wherein a weighted sum of pixels from at least one input picture is taken in a filter aperture to generate a pixel in an output picture, characterised in that the weighted sum includes products of triplets of pixels, said products of triplets of pixels comprising the multiplicative product of three pixels multiplied by each other.

Suitably, a video frame is derived through spatial interpolation from each video field of an interlaced input signal.

In one form of the invention, the weighted sum comprises pixels and products of triplets of pixels.

In another aspect, the present invention consists in video signal processing apparatus for interpolation, comprising an interpolation filter taking a weighted sum of pixels from at least one input picture in a filter aperture, to generate a pixel in an output picture, characterised in that the weighted sum includes products of triplets of pixels.

The invention is defined by the claims.

This invention will now be described by way of example with reference to the accompanying drawings, in which:-

Figure 1 is a diagram of a de-interlacing circuit according to the present invention;

Figure 2 is a diagrammatical representation of a four tap third order filter useful in accordance with the present invention;

Figure 3 is a diagram illustrating a process for designing a filter according to the present invention;

Figure 4 is a series of diagrams illustrating filter apertures for use in the present invention;

Figure 5 is a diagram of an interpolating circuit according to one embodiment of the present invention; and

Figure 6 is a diagram of an interpolating circuit according to a further embodiment of the present invention.

In one embodiment of this invention, the aim is to interpolate one field of a video frame from another. This is known as de-interlacing.

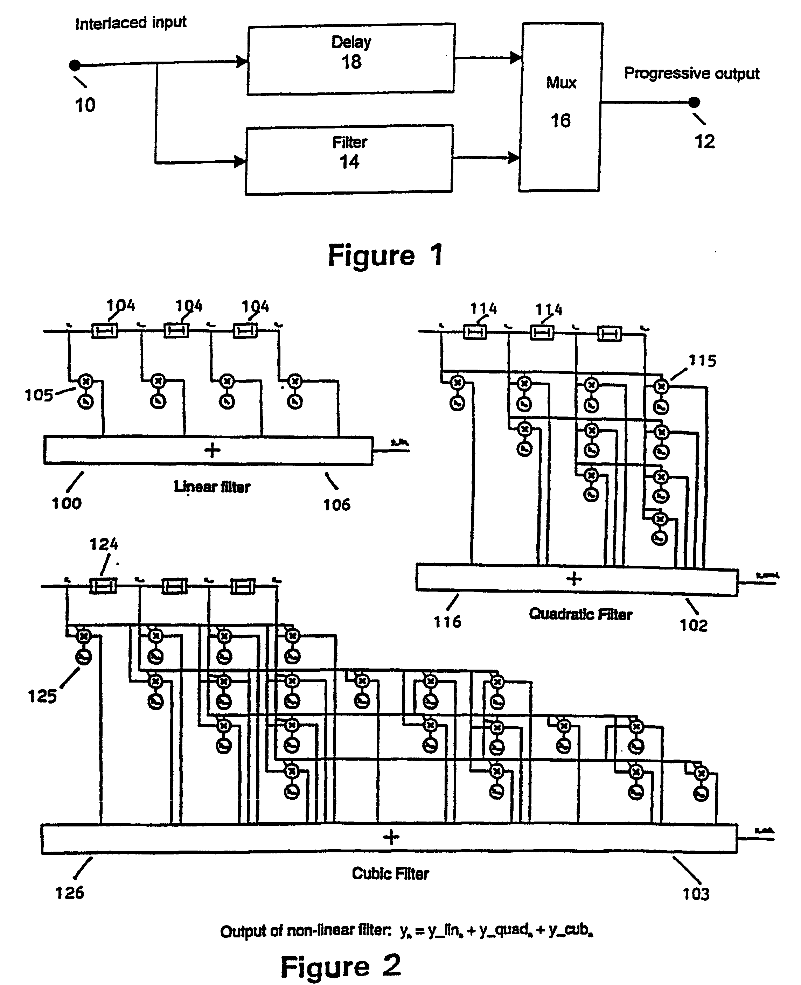

There is shown in Figure 1, a de-interlacing circuit in which an interlaced video signal at input terminal 10 is operated upon to form a progressive signal at output terminal 12. A filter 14 receives one field of a video frame and from it interpolates the other field of the frame. A multiplexer 16 receives these "new" fields, as well as the original fields (appropriately delayed at 18). The output of the multiplexer is a progressive scan video signal.

In a traditional de-interlacing circuit, the filter 14 is linear, each filter tap (derived by appropriate delay elements from the input video) is multiplied by a filter weight and the resulting products are summed to give the filter output. In contrast, the present invention proposes a polynomial non-linear filter. This includes, in addition to the linear terms, the sum of filter coefficients multiplied by products of pixel values, triplets of pixel values, etc. For example, a four tap filter for use in the present invention will contain four filter coefficients which are multiplied by single pixel values, ten filter coefficients which are multiplied by products of pixel values, twenty filter coefficients which are multiplied by triplets of pixel values, etc.

In any practical embodiment, the polynomial series must be truncated at some point. A filter truncated at the third order is convenient and there is shown diagrammatically in Figure 2, a four tap third order filter for use as filter 14 of Figure 1. The polynomial filter is illustrated graphically as the combination of a linear filter 100, a quadratic filter 102 and a cubic filter 103. The linear filter utilises three delay elements 104 to generate four taps from the input signal. Each tap is multiplied by a coefficient in a respective multiplier 105 and a weighted sum generated in summing device 106. In the quadratic filter 102, similar delay elements 114 provide four taps from the input video signal and ten multipliers 115 generate all ten possible products, again weighted by respective coefficients. A sum is formed in summing device 116. The cubic filter has twenty multipliers 125 operating on the taps from delay elements 124 to generate all possible combinations of triplets of taps and a weighted sum is formed in summing device 126. Although the delay elements 104, 114 and 124 have been shown separately in the three filters, one set of delay elements would usually suffice.

It will be understood that in any practical circuit there are very many ways of embodying the described filter. Typically, a single processing element will receive the four taps and with appropriate multipliers, coefficient stores and one or more summing devices, output directly the sum of the linear, quadratic and cubic filters.

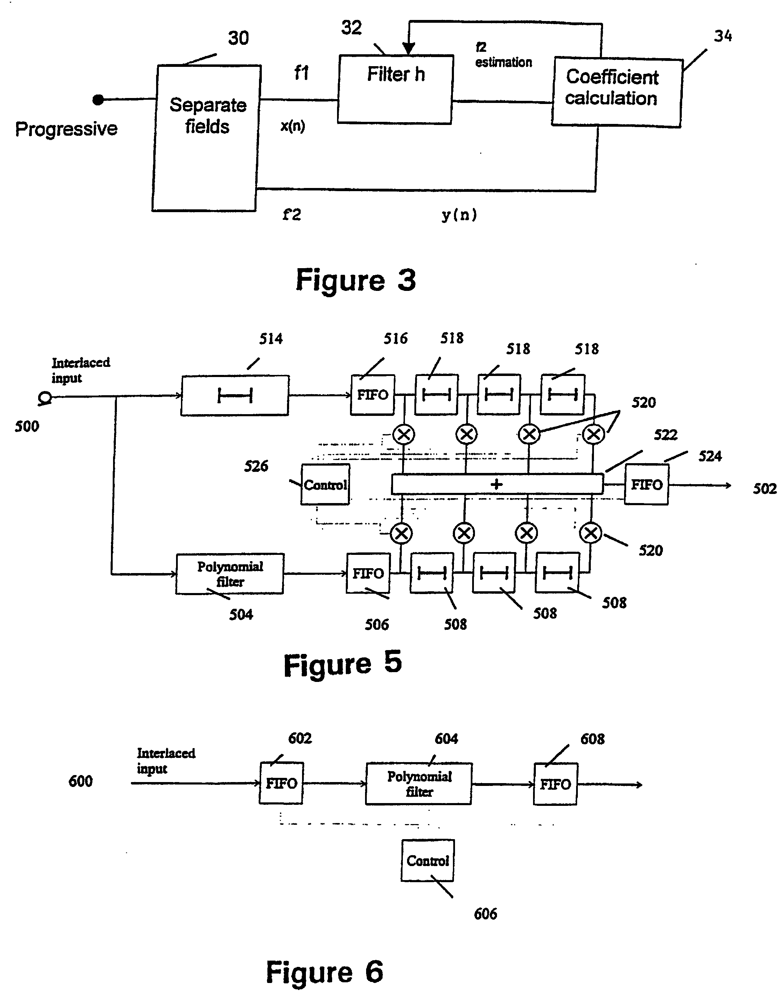

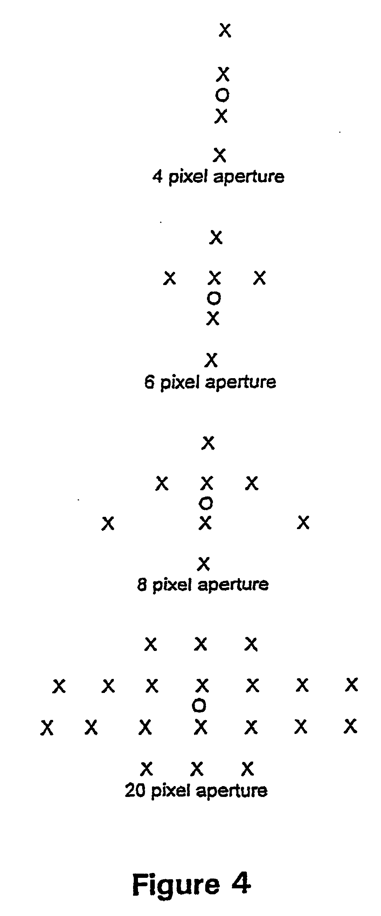

To understand the technique of constructing a filter according to the present invention, it is helpful to look at Figure 3. The object is to design an N point digital finite impulse response filter, h, to modify the input, x(n), in such a way as to minimise the mean square error, e(n), between the filter output and the desired signal, y(n). In the case of de-interlacing, x(n) is field f1, and y(n) is field f2. The aim is to create a filter h(n) that when operated on f1, gives the best possible estimate of f2 such that the mean squared error between the estimate of f2 and actual f2 is minimised. In Figure 3, a progressive input is proved to block 30 which separates the fields of a video frame and outputs field f1 and field f2. Field f1, that is to say x(n) is provided to the filter 32 to generate an estimate of f2. This is then compared in block 34 with the actual f2, that is to say y(n).

The filter impulse response which minimises the sum of the squared errors of data of length L, is given by the solution of the over-determined (assuming L>N) system of equations

$$Xh = y \quad \text{where} \quad X = \begin{bmatrix} x(L) & x(L-1) & \cdots & x(L-N+1) \\ x(L-1) & x(L-2) & \cdots & x(L-N) \\ \vdots & \vdots & & \vdots \\ x(2) & x(1) & \cdots & 0 \\ x(1) & 0 & \cdots & 0 \end{bmatrix} \quad \text{and} \quad y = \begin{bmatrix} y(L) \\ y(L-1) \\ \vdots \\ y(2) \\ y(1) \end{bmatrix}.$$

the least squares solution of which is,

$$h = (X^T X)^{-1} X^T y.$$

where $X^T X = R$ is known as the auto-correlation matrix and $X^T y = p$ is known as the cross correlation vector. Note $X^T X$ and $X^T y$ are usually much smaller than X. Hence, it is much more efficient to compute $X^T X$ and $X^T y$ directly from x(n) and y(n) rather than to form X.

The extension of this to a more general non-linear model is in principle simply a matter of modifying the data matrix X. Below we show the data matrix for a second order polynomial non-linear filter, in which a constant (DC) term has also been included. A symmetric form for the non-linear components of the filter has been assumed so this matrix has dimension

$$L \times \left( N + \frac{N(N+1)}{2} \right).$$

$$X = \begin{bmatrix} 1 & x(L) & x(L-1) & \cdots & x(L-N+1) & x(L)^2 & x(L)x(L-1) & \cdots & x(L)x(L-N+1) & x(L-1)^2 & \cdots & x(L-N+1)^2 \\ 1 & x(L-1) & x(L-2) & \ldots & x(L-N) & x(L-1)^2 & x(L-1)x(L-2) & \cdots & x(L-1)x(L-N) & x(L-2)^2 & \cdots & x(L-N)^2 \\ 1 & x(L-2) & x(L-3) & \ldots & x(L-N-1) & x(L-2)^2 & x(L-2)x(L-3) & \ldots & x(L-1)x(L-N-1) & x(L-3)^2 & \cdots & x(L-N-1)^2 \\ \vdots & \vdots & \vdots & & \vdots & \vdots & \vdots & & \vdots & \vdots & & \vdots \\ 1 & x(3) & x(2) & \cdots & 0 & x(3)^2 & x(3)x(2) & \cdots & 0 & x(2)^2 & \cdots & 0 \\ 1 & x(2) & x(1) & \cdots & 0 & x(2)^2 & x(2)x(1) & \cdots & 0 & x(1)^2 & \cdots & 0 \\ 1 & x(1) & 0 & \cdots & 0 & x(1)^2 & 0 & \cdots & 0 & 0 & \cdots & 0 \end{bmatrix}$$

The optimal filter, in the least squares sense, can then be estimated by solving $h = R^{-1}p$. The filter will contain three separate components; the DC term, the standard linear coefficients which should be multiplied by single pixel values, and the quadratic coefficients which will be multiplied by product of pixel values.

The present invention recognises that if the mean square error is chosen for optimisation of the filter, it is possible to calculate the filter coefficients h without forming a trial filter and iterating. The training process then represents not an iterative improvement in a trial or prototype filter, but the collection of sufficient data from real picture material for which both x and y are known, to enable calculation of meaningful auto-correlation matrix and cross correlation vector.

A polynomial model truncated at the third order is preferred according to this invention. This will contain linear, quadratic, and cubic filters and so is able to model systems which contain both quadratic and cubic non-linear elements. These generate both skewed and symmetric distortions of the probability density function. Higher order models can be used and are shown to give improved results but the size of the filter and the computation required in its estimation rise exponentially and there are rapidly diminishing retums. For example, the fifth order, six pixel cubic non-linear filter does perform better than the third order, six pixel filter but there are over five times as many terms.

For the linear case, it is found that neither increasing the number of taps in the vertical direction, of a six point vertical filter nor utilising pixels in the horizontal direction, significantly reduces the mean squared error. However, for a filter according to the present invention, the choice of aperture has much more dramatic results. For example, a two dimensional aperture does give a significant improvement over a one dimensional one. This is thought to be due to the ability of the non-linear filter to deal with sloping edges and lines and utilise gradient information.

However, as can be seen in Table 1, the number of filter coefficients rises exponentially with the number of pixels. Due to computational constraints a sensible maximum size is presently taken for a cubic filter of 20 pixels and for a fifth order filter, 6 pixels.

Table 1:

| Total number of filter coefficients for third and fifth order non-linear filters containing 4,6,8,12 and 20 pixels. | | |
|---|---|---|
| No. of pixels | Number of filter coefficients | |
| | Third order non-linear filter | Fifth order non-linear filter |
| 4 | 35 | 126 |
| 6 | 84 | 462 |
| 8 | 165 | 1287 |
| 12 | 445 | 6178 |
| 20 | 1770 | 53129 |

As the number of pixels available is limited it is important to choose the correct shape of aperture. Best results seem to occur from apertures that contain four vertical pixels and then a number of horizontal pixels. The apertures used for the 4, 6, 8 and 20 pixel filters are shown in Figure 4 (**X** denotes the pixels used in field, f1, to estimate the pixel denoted by **O** in field, f2). The use of horizontal information helps to cope with the near horizontal lines and edges that often cause problems due to jagging in de-interlacing.

Table 2 shows the mean squared error between the estimated field and actual field for a particular reference picture, for a series of different filters. It can be seen that in all cases, the non-linear filters perform better than standard linear filters.

Table 2:

| Mean squared errors for various filters used on EBU reference picture "Girl". | | |
|---|---|---|
| Filter type | Mean squared error between the estimate of the field and the actual field | Number of coefficients in filter |
| 2 pixel linear filter (0.5/0.5) | 23.15 | 2 |
| 4 pixel linear filter (optimum) | 18.61 | 4 |
| 8 pixel linear filter (optimum) | 18.58 | 8 |
| 36 pixel linear filter (optimum) | 18.55 | 36 |
| 4 pixel cubic filter (optimum) | 16.14 | 35 |
| 6 pixel cubic filter (optimum) | 15.67 | 84 |
| 6 pixel fifth order filter (optimum) | 14.88 | 462 |
| 8 pixel cubic filter (optimum) | 15.21 | 165 |
| 12 pixel cubic filter (optimum) | 14.69 | 445 |
| 20 pixel cubic filter (optimum) | 13.50 | 1770 |

It is found that the non-linear filter produces much smoother edges and curves than its linear counterpart, with reduced jagging.

Finally, the mean square error is given for a series of pictures for a linear, and two non-linear filters, (Table 3). It can be seen that in all cases the non-linear filters perform as well as or better than the linear filters.

Table 3:

| Mean squared error for standard EBU pictures | | | |
|---|---|---|---|
| Picture | Error for 4 pixel linear | Error for 4 pixel cubic | Error for 12 pixel cubic |
| Blackboard | 49 | 43 | 43 |
| Boats | 73 | 67 | 66 |
| Boy | 73 | 64 | 57 |
| Clown | 23 | 20 | 20 |
| Girl | 19 | 17 | 17 |
| Pond | 166 | 153 | 140 |
| Tree | 313 | 303 | 303 |
| couple | 91 | 87 | 86 |
| Kiel | 135 | 128 | 128 |
| Latin | 363 | 289 | 234 |

Non-linear polynomial filters in accordance with the present invention can give dramatically improved performance over conventional linear predictors when used for spatial de-interlacing. Polynomial non-linear filters are generally more complex than their linear equivalents, although only using spatial information reduces the complexity significantly as compared to conventional spatiotemporal filters. The increased performance seems to occur mainly along edges; whereas linear filters often produce jagging on diagonal lines and curves, the nonlinear filters described here considerably reduce such artifacts.

A non-linear filter for use in the present invention can be implemented directly as a set of multipliers and an adder as so far described or the same charateristic can be achieved using a lookup table.

A de-interlacing circuit can operate independently or the de-interlacing function can be incorporated within a circuit operating on an interlaced signal for the purposes of standards conversion, upconversion, downconversion, aspect ratio conversion, digital video effects and so on.

Thus, turning to Figure 5, there is shown a circuit which operates on an interlaced video signal received at input terminal 500 to provide through interpolation an output video signal at terminal 502. This may be an interlace or a progressive signal and may have different numbers of lines per field, different numbers of fields per second and so on, depending upon the specific function of the circuit. One example would be an interlaced output in a different television broadcast standard to the input.

The input signal of Figure 5 is passed to a polynomial filter 504 that in one example takes the form illustrated symbolically in Figure 2. The output of filter 504, comprising the "new" fields, passes through a FIFO 506 to a series chain of delay elements 508. The original fields are taken through a delay 514 to a similar FIFO 516 and delay elements 518.

A weighted sum of the filter taps generated by the delay elements 508 and 518 is taken by means of multipliers 520 and summing device 522. The output of the summing device 522 is taken through a FIFO 524, to the output terminal. The coefficients of the multipliers are set through control unit 526, which also serves to control the rates at which data is read into and read out of the FIFO's 506, 516 and 524.

The skilled man will recognize that through appropriate choice of the delay elements and control of the FIFO's and multipliers, a wide variety of interpolation procedures can be conducted.

In another arrangement, the interpolation process is "folded into" the polynomial filter. Thus as shown in Figure 6, an interpolating circuit has the interlaced video input signal at terminal 600 passing through FIFO 602 to a polynomial filter 604. This may be of the same general form as Figure 2 but with each of the multipliers receiving its multiplication coefficient dynamically from a control unit 606. The output of the filter 604 passes through a further FIFO 608 with the control unit 606 controlling the rates at which data is read into and read out of the FIFO's 602 and 608.

In still a further modification, selecting at least some of the delay elements of the filter to be field delays rather than pixel or line delays, a temporal interpolator can be produced. It is known that the performance of a de-interlacer can be improved for still material by employing temporal interpolation. It is then necessary to detect motion and to adapt or switch on detection of motion from temporal interpolation. This motion adaption is preferably conducted With prior art techniques, this switching or adaptation produces adaption artefacts that can be visually disturbing. It is found that by using a spatial interpolator according to the present invention, and preferably also a temporal interpolator using a similar polynomial filter, the visibility of adaption artefacts is considerably reduced. It is believed that the described non-linear behaviour of an interpolator according to the present invention provides a "fine" adaption, inasmuch as the value of a pixel in a product of two pixels can be regarded as varying the multiplication coefficient applied to the other pixel. Adaption in the conventional sense from temporal to spatial interpolation can in this sense be regarded as "coarse" adaption. Taking numerals as an illustration, coarse adaption might be regarded as switching from +5 to -5, which is a step large enough to produce switching artefacts. Consider now that the two values of +5 and -5 are both subject to fine adaption in the range 0,1,2,3,4,5,6,7,8,9 in the case of the +5 value, and -9,-8,-7,-6,-5,-4,-3,-2-1,0 in the case of the -5 value. Now, in face of a tendency dictating a switch from +5 to -5, it is to be expected that fine adaption will have occurred in the +5 value towards 0, thus minimising the switch step. If the -5 value has similarly undergone fine adaption towards 0, the step will be further reduced.

Whilst an important example, de-interlacing is not the only application for apparatus according to the present invention. It may be more regarded as useful with an input video signal which is undersampled, de-interlacing being then only one example.

## Claims

1. A video process wherein a weighted sum of pixels from at least one input picture is taken in a filter aperture to generate a pixel in an output picture, **characterised in that** the weighted sum includes products of triplets of pixels, said products of triplets of pixels comprising the multiplicative product of three pixels multiplied by each other.

2. A video process according to Claim 1, in which spatial interpolation is conducted.

3. A video process according to Claim 2, in which a video frame is derived through spatial interpolation from each video field of an interlaced input signal.

4. A video process according to any one of the preceding claims, wherein the weighted sum comprises pixels and products of triplets of pixels.

5. Video signal processing apparatus for interpolation, comprising an interpolation filter taking a weighted sum of pixels from at least one input picture in a filter aperture, to generate a pixel in an output picture, **characterised in**

**that** the weighted sum includes products of triplets of pixels, said products of triplets of pixels comprising the multiplicative product ofthree pixels multiplied by each other.

6. Video signal procesing apparatus according to Claim 5, wherein said triplets of pixels are from the same picture.

7. Video signal processing apparatus according to Claim 5 or Claim 6, wherein the filter is continuously in circuit, during operation of the apparatus.

8. A video process according to Claim 1, comprising training and processing modes, wherein in a training mode, an input picture from which a known, desired output picture can be generated, is fed to a video signal processing apparatus comprising a filter taking a weighted sum of pixels from an input picture according to a set of filter weightings, to generate a pixel in an output picture, the weighted sum including products of triplets of pixels, said products of triplets of pixels comprising the multiplicative product of three pixels multiplied by each other and the set of filter weightings optimised to minimise an error between said known picture and an output of said video signal processing apparatus and wherein in a processing mode, an input picture is fed to said video signal processing. apparatus having said optimised filter weightings to generate an output picture.

9. A process according to Claim 8, wherein the error that is minimised is a mean square error.

10. Apparatus according to Claim 5, and operating on an undersampled video signal **x**, there being correctly sampled information available for at least a training sequence of **x** to generate the desired result **y** of an interpolation process on **x**, the filter taking weighted sums of products of pixels from **N** pixels in a filter aperture; the coefficients **h** employed in the weighting being derived according to h = $\mathbf{(X^TX)^{-1}X^Ty}$ where **X** is the matrix of **N** pixels of the signal **x** over the training sequence.

11. Apparatus according to Claim 10, wherein the matrix **X** includes products of pairs of pixels.

12. Apparatus according to Claim 10 or Claim 11, wherein the matrix **X** includes products of triplets of pixels.

**Patentansprüche**

1. Videoprozess, bei welchem eine gewichtete Summe von Pixeln von wenigstens einem Eingangsbild in eine Filteröffnung hereingenommen wird, um einen Pixel in einem Ausgangsbild zu erzeugen, **dadurch gekennzeichnet, dass** die gewichtete Summe Produkte von Triplets von Pixeln enthält, wobei die Produkte von Triplets von Pixeln das multiplikative Produkt der drei Pixel umfassen, die miteinander multipliziert wurden.

2. Videoprozess nach Anspruch 1, bei welchem eine räumliche Interpolation durchgeführt wird.

3. Videoprozess nach Anspruch 2, bei welchem ein Video-Vollbild durch eine räumliche Interpolation von jedem Video-Halbbild eines verschachtelten bzw. verflochtenen Eingangssignals abgeleitet wird.

4. Videoprozess nach einem der vorhergehenden Ansprüche, bei welchem die gewichtete Summe Pixel und Produkte von Triplets von Pixeln umfasst.

5. Videosignal-Verarbeitungsapparat zur Interpolation, der einen Interpolationsfilter umfasst, der eine gewichtete Summe von Pixeln von wenigstens einem Eingangsbild in einer Filter-Öffnung nimmt, um ein Pixel in einem Ausgangsbild zu erzeugen, **dadurch gekennzeichnet, dass** die gewichtete Summe Produkte von Triplets von Pixeln enthält, wobei die Produkte von Triplets von Pixeln das multiplikative Produkt der drei Pixel umfasst, die miteinander multipliziert wurden.

6. Videosignal-Verarbeitungsapparat nach Anspruch 5, bei welchem die Triplets von Pixeln von demselben Bild sind.

7. Videosignalverarbeitungsapparat nach Anspruch 5 oder Anspruch 6, bei welchem der Filter fortlaufend während dem Betrieb des Apparats eingeschaltet bzw. in den Schaltkreis eingebunden ist.

8. Videoprozess nach Anspruch 1, der Training- und Verarbeitungs-Modi umfasst, wobei in einem Training-Modus ein Eingangsbild, von dem ein bekanntes gewünschtes Ausgangsbild erzeugt werden kann, zu einem Videosignal-Verarbeitungsapparat zugeführt wird, der einen Filter umfasst, der eine gewichtete Summe von Pixeln von einem Eingangsbild gemäß einem Satz von Filter-Gewichten nimmt, um ein Pixel in einem Ausgangsbild zu erzeugen, wobei die gewichtete Summe Produkte von Triplets von Pixeln enthält, wobei die Produkte von Triplets von Pixeln das multiplikative Produkt von drei Pixeln umfassen, die miteinander multipliziert wurden, und der Satz von Filter-Gewichten optimiert wird, um einen Fehler zwischen dem bekannten Bild und einer Ausgabe des Videosignal-Verarbeitungsapparats zu minimieren, und wobei in einem Verarbeitungsmodus ein Eingangsbild zu dem Videosignal-Verarbeitungsapparat zugeführt wird, der die optimierten Filtergewichte aufweist, um ein Ausgangsbild zu erzeugen.

9. Prozess nach Anspruch 8, bei welchem der Fehler, der minimiert ist bzw. wird, ein mittlerer quadratischer Fehler ist.

10. Apparat nach Anspruch 5 und der mit einem unterabgetasteten Videosignal **x** arbeitet, wobei es korrekt abgetastete Information gibt, die für wenigstens eine Training-Sequenz von **x** zur Verfügung steht, um das gewünschte Ergebnis **y** eines Interpolationsprozesses mit **x** zu erzeugen, wobei der Filter gewichtete Summen von Produkten von Pixeln von **N**-Pixeln in eine Filter-Öffnung nimmt; wobei die Koeffizienten **h**, die beim Gewichten verwendet werden, gemäß **h** = $(\mathbf{X^TX})^{-1}\mathbf{X^Ty}$ abgeleitet werden, wobei **X** die Matrix von **N**-Pixeln des Signals x über die Training-Sequenz ist.

11. Apparat gemäß Anspruch 10, wobei die Matrix **X** Produkte von Paaren von Pixeln enthält.

12. Apparat gemäß Anspruch 10 oder Anspruch 11, wobei die Matrix **X** Produkte von Triplets von Pixeln enthält.

## Revendications

1. Traitement vidéo dans lequel une somme pondérée de pixels à partir d'au moins une image d'entrée est prise dans une ouverture de filtre pour générer un pixel dans une image de sortie, **caractérisé en ce que** la somme pondérée comprend des produits de triplets de pixels, lesdits produits de triplets de pixels comprenant le produit multiplicatif de trois pixels multipliés les uns par les autres.

2. Traitement vidéo selon la revendication 1, dans lequel l'interpolation spatiale est effectuée.

3. Traitement vidéo selon la revendication 2, dans lequel une trame vidéo est dérivée par l'intermédiaire d'une interpolation spatiale à partir de chaque trame vidéo d'un signal d'entrée entrelacé.

4. Traitement vidéo selon l'une quelconque des revendications précédentes, dans lequel la somme pondérée comprend des pixels et les produits de triplets de pixels.

5. Appareil de traitement de signal vidéo pour l'interpolation, comprenant un filtre d'interpolation prenant une somme pondérée de pixels à partir d'au moins une image d'entrée dans une ouverture de filtre, pour générer un pixel dans une image de sortie, **caractérisé en ce que** la somme pondérée comprend les produits de triplets de pixels, lesdits produits de triplets de pixels comprenant le produit multiplicatif de trois pixels multipliés les uns par les autres.

6. Appareil de traitement de signal vidéo selon la revendication 5, dans lequel lesdits triplets de pixels sont de la même image.

7. Appareil de traitement de signal vidéo selon la revendication 5 ou la revendication 6, dans lequel le filtre est continuellement en circuit pendant le fonctionnement de l'appareil.

8. Traitement vidéo selon la revendication 1, comprenant des modes d'apprentissage et de traitement, où dans un mode d'apprentissage, une image d'entrée à partir de laquelle une image de sortie connue et voulue peut être générée, est fournie à un appareil de traitement de signal vidéo comprenant un filtre prenant une somme pondérée de pixels à partir d'une image d'entrée selon un jeu de pondérations de filtre, pour générer un pixel dans une image de sortie, la somme pondérée comprenant des produits de triplets de pixels, lesdits produits de triplets de pixels comprenant le produit multiplicatif de trois pixels multipliés les uns par les autres et le jeu des pondérations de filtre optimisées pour minimiser une erreur entre ladite image connue et une sortie dudit appareil de traitement de signal vidéo et où dans un mode de traitement, une image d'entrée est fournie audit appareil de traitement de signal vidéo ayant lesdites pondérations de filtre optimisées pour générer une image de sortie.

9. Traitement selon la revendication 8, dans lequel l'erreur qui est minimisée est une erreur quadratique moyenne.

10. Appareil selon la revendication 5, et fonctionnant sur un signal vidéo sous-échantillonné **x**, les informations échantillonnées correctement étant disponibles pendant au moins une séquence d'apprentissage de **x** pour générer le résultat voulu **y** d'un traitement d'interpolation sur **x**, le filtre prenant les sommes pondérées des produits de pixels à partir de **N** pixels dans une ouverture de filtre ; les coefficients **h** employés dans la pondération étant dérivés selon $h = (X^T X)^{-1} X^T y$ où **X** est la matrice de **N** pixels du signal **x** sur la séquence d'apprentissage.

11. Appareil selon la revendication 10, dans lequel la matrice **X** comprend les produits des paires de pixels.

12. Appareil selon la revendication 10 ou la revendication 11, dans lequel la matrice **X** comprend des produits de triplets de pixels.

**Figure 1**

Output of non-linear filter: $y_n = y\_lin_n + y\_quad_n + y\_cub_n$

**Figure 2**

Progressive •————

**30** Separate fields

f1 x(n)

**32** Filter h

f2 estimation

**34** Coefficient calculation

f2 y(n)

# Figure 3

Interlaced input

**500** ○————

**514** ⊢⊣

**516** FIFO

**518** ⊢⊣

**518** ⊢⊣

**518** ⊢⊣

**520** ⊗ ⊗ ⊗ ⊗

**526** Control

**522** **524** +

FIFO ————→ **502**

⊗ ⊗ ⊗ ⊗ **520**

**504** Polynomial filter

**506** FIFO

**508** ⊢⊣ ⊢⊣ ⊢⊣ **508**

# Figure 5

Interlaced input

**600** ————→

**602** FIFO

**604** Polynomial filter

**608** FIFO ————→

**606** Control

# Figure 6

```
            X

            X
            O
            X

            X
      4 pixel aperture


            X

      X     X     X
            O
            X

            X
      6 pixel aperture


            X

      X     X     X
            O
   X        X        X

            X
      8 pixel aperture


      X     X     X

   X  X  X  X  X  X  X
            O
   X  X  X  X  X  X  X

      X     X     X
     20 pixel aperture
```

# Figure 4